Europäisches Patentamt

European Patent Office

Office européen des brevets

(19)

(11) EP 0 517 222 B1

(12) **EUROPÄISCHE PATENTSCHRIFT**

(45) Veröffentlichungstag und Bekanntmachung des
Hinweises auf die Patenterteilung:
**11.09.1996  Patentblatt 1996/37**

(51) Int Cl.$^6$: **C08L 23/06**
// (C08L23/06, 23:04)

(21) Anmeldenummer: **92109468.6**

(22) Anmeldetag: **04.06.1992**

(54) **Polyethylen-Formmasse**

Polyethylene moulding composition

Masse de moulage à base de polyéthylène

(84) Benannte Vertragsstaaten:
**AT BE DE ES FR GB IT NL**

(30) Priorität: **05.06.1991  DE 4118378**

(43) Veröffentlichungstag der Anmeldung:
**09.12.1992  Patentblatt 1992/50**

(73) Patentinhaber: **HOECHST
AKTIENGESELLSCHAFT
65926 Frankfurt am Main (DE)**

(72) Erfinder:
- **Böhm, Ludwig, Dr.
  W-6234 Hattersheim am Main (DE)**
- **Enderle, Hans-Frieder, Dr.
  W-6000 Frankfurt am Main 1 (DE)**
- **Jastrow, Horst, Dr.
  W-6233 Kelkheim (Taunus) (DE)**

(56) Entgegenhaltungen:
**EP-A- 0 052 555          EP-A- 0 129 312
EP-A- 0 134 427          WO-A-90/03414
GB-A- 2 148 906**

Anmerkung: Innerhalb von neun Monaten nach der Bekanntmachung des Hinweises auf die Erteilung des europäischen
Patents kann jedermann beim Europäischen Patentamt gegen das erteilte europäische Patent Einspruch einlegen.
Der Einspruch ist schriftlich einzureichen und zu begründen. Er gilt erst als eingelegt, wenn die Einspruchsgebühr
entrichtet worden ist. (Art. 99(1) Europäisches Patentübereinkommen).

**Beschreibung**

Die Erfindung bezieht sich auf eine Polyethylen-Formmasse, welche aus zwei verschiedenen Polyethylen-Typen besteht und sich zur Herstellung von Gasrohren, Deponiebahnen und Folien mit sehr guten Eigenschaften eignet.

Bekannt ist die Herstellung von Blends aus Polyethylen hoher Dichte (PE-HD) und linearem Polyethylen niedriger Dichte (PE-LLD) zur Herstellung von Polyethylen mittlerer Dichte (PE-MD), um zu Formmassen mit verbesserten Eigenschaften zu gelangen (vgl. GB 843,697, GB 860,329, GB 944,208, US 4,374,227, CA 1,106,521). Das in diesen Blends eingesetzte Polyethylen hoher Dichte besitzt monomodale Molmassenverteilung.

Bekannt ist ferner eine Ethylenpolymer-Formmasse, welche aus 15 bis 90 Gew.-% eines Ethylen-Homopolymers und 85 bis 10 Gew.-% eines Ethylen-Copolymers besteht (vgl. EP 134 427). Die Formmasse soll eine Intrinsic-Viskosität im Bereich von 2,0 bis 5,2 dl/g, eine Dichte von 0,938 bis 0,970 g/cm$^3$ und eine Schwellrate von mindestens 1,30 besitzen. Außerdem soll die Formmasse den Gleichungen log MI $\geq$ 0,81-0,69 ($\eta$) und log MT $\geq$ 1-0,33 log MI, worin MI ein Schmelzindex, $\eta$ die Intrinsic-Viskosität und MT die Schmelzspannung bedeuten, genügen.

Zur Instrinsic-Viskosität wird ausgeführt, daß die Verarbeitbarkeit der Formmasse schlecht sei, wenn der Wert der Intrinsic-Viskosität nicht innerhalb des obengenannten Bereiches liege. Außerdem besitzen Formkörper eine mangelhafte Steifigkeit, wenn die Dichte der Formmasse niedriger als 0,938 g/cm$^3$ betrage. Wenn die Schwellrate kleiner als 1,30 sei, sei kein zufriedenstellendes Abkneifen des Rohlings in der Form zu erreichen, und ein Abweichen der gemessenen Werte von den durch die obengenannten Gleichungen erechneten führe zu Schwierigkeiten bei der Verarbeitung der Formmassen.

Bekannt ist schließlich eine Polyethylen-Formmasse, welche aus drei Polyethylenen besteht und einen Schmelzindex von 0,001 bis 10 g/10 min und eine Dichte von 0,91 bis 0,97 g/cm$^3$ besitzt (vgl. EP 129 312). Die drei Polyethylene sind nach verschiedenen Verfahren hergestellt worden und haben unterschiedliche Molmassen. Es sind ein niedermolekulares Ziegler-Polyethylen (A) mit enger Molmassenverteilung ("flow-ratio" = MFI 190/21,6 / MFI 190/2,16 = 20 bis 50), ein hochmolekulares Ziegler-Polyethylen (C) mit enger Molmassenverteilung ("flow ratio" = 20 bis 50) und ein mittels eines chromhaltigen Trägerkatalysators hergestelltes Polyethylen (B) mit einer mittleren Molmasse und einer breiten Molmassenverteilung ("flow ratio = 40 bis 150). Auch in diesem Dokument wird darauf hingewiesen, daß Abweichungen von den genannten Bereichen zu Nachteilen bei der Verarbeitung der Formmasse und bei ihren Eigenschaften führen.

Es wurde nun gefunden, daß man die Eigenschaften von Polyethylenblends weiter verbessern kann, wenn als Polyethylen hoher Dichte ein solches mit einer bimodalen Molmassenverteilung eingesetzt wird.

Die Erfindung betrifft somit eine Polyethylen-Formmasse mit einer Dichte (23 °C) von 0,930 bis 0,940 g/cm$^3$ und einem MFI 190/2,16 von 0,05 bis 1,0 g/10 min, bestehend aus 50 bis 80 Gew.-% eines Polyethylen-HD mit einer Dichte (23 °C) von 0,940 bis 0,960 g/cm$^3$, einem MFI 190/2,16 von 0,01 bis 0,5 g/10 min und einer breiten bimodalen Molmassenverteilung, und 20 bis 50 Gew.-% eines Polyethylens-LLD mit einer niedrigen Dichte (23 °C) von 0,910 bis 0,930 g/cm$^3$, einem MFI 190/2,16 von 0,5 bis 2,0 g/10 min und einer engen unimodalen Molmassenverteilung.

Die erfindungsgemäße Polyethylen-Formmasse besteht aus einem Polyethylen (PE-HD) hoher Dichte und einem linearen Polyethylen niedriger Dichte (PE-LLD).

Das Polyethylen-HD besitzt eine Dichte (23 °C) von 0,940 bis 0,960, vorzugsweise 0,940 bis 0,950 g/cm$^3$ und einen MFI 190/2,16 von 0,01 bis 0,8, vorzugsweise 0,1 bis 0,5 g/10 min. Es besitzt weiterhin eine sehr breite bimodale Molmassenverteilung und kann geringe Anteile an Monomereinheiten von Propylen, 1-Buten, 1-Penten oder 1-Hexen enthalten.

Die Bimodalität kann als Maß für die Lage der Schwerpunkte der beiden Einzel-Molmassenverteilungen mit Hilfe der Viskositätszahlen (VZ nach ISO/R 1191) der in den beiden Polymerisationsstufen gebildeten Polymeren beschrieben werden. Die VZ$_1$ des in der ersten Stufe gebildeten Polyethylens beträgt 40 bis 80 cm$^3$/g, die VZ des Endproduktes liegt im Bereich von 270 bis 330 cm$^3$/g. Die VZ$_2$ des in der zweiten Stufe gebildeten Polyethylens läßt sich nach der folgenden Gleichung berechnen:

$$VZ_2 = \frac{VZ_{Endprodukt} - w_1 VZ_1}{1 - w_1}$$

wobei $w_1$ der Gewichtsanteil (Gew.-%) des in der ersten Stufe polymerisierten Ethylens, bezogen auf das gesamte in beiden Stufen polymerisierte Ethylen, ist. VZ$_2$ beträgt in der Regel 480 bis 580 cm$^3$/g.

Das Polyethylen-HD wird erhalten durch Polymerisation von Ethylen, gegebenenfalls in Gegenwart geringer Mengen von C$_3$- bis C$_8$-1-Olefinen, in Suspension, in Lösung oder in der Gasphase, bei einer Temperatur von 20 bis 120 °C und einem Druck von 2 bis 60 bar in Gegenwart eines Ziegler-Katalysators, welcher aus einer Übergangsmetallverbindung und einer aluminiumorganischen Verbindung besteht. Die Polymerisation wird zweistufig durchgeführt. Die Molmasse wird mit Hilfe von Wasserstoff geregelt.

Der Wasserstoffanteil im Gasraum des ersten Reaktors beträgt 80 ± 5 Vol.-%, der im Gasraum des zweiten Reaktors 6 ± 4 Vol-%.

Ein typisches Beispiel für die Herstellung eines geeigneten Polyethylens-HD ist nachstehend beschrieben:

Zunächst wird ein Katalysator hergestellt. Dazu werden 114,3 g Magnesiumethylat in einem 3-l-Vierhalskolben mit Tropftrichter, KPG-Rührer, Rückflußkühler und Thermometer in 1 dm$^3$ einer Dieselölfraktion unter $N_2$-Überlagerung dispergiert. Zu dieser Dispersion werden unter Durchleiten eines schwachen $N_2$-Stromes innerhalb von 2 h bei 100 °C 474 g Titantetrachlorid getropft. Danach wird bei 100 °C mit Dieselöl gewaschen, bis die überstehende Lösung kein Titan mehr enthält. Nun werden bei 140 °C innerhalb 1 h 38 g Titantetrachlorid zugetropft und der Ansatz unter Überleiten eines schwachen $N_2$-Stromes weitere 60 h gerührt. Anschließend wird das Umsetzungsprodukt mit der oben erwähnten Dieselölfraktion gewaschen, bis die überstehende Lösung kein Titan mehr enthält.

Nach dem Trocknen besitzt der Feststoff (Komponente A) etwa folgende analytische Zusammensetzung:

Ti    5,1 Gew.-%
Mg   20,8 Gew.-%
Cl    71,7 Gew.-%

39,9 g der Komponente A werden in 150 cm$^3$ Dieselöl suspendiert und bei 20 °C unter Rühren mit 100 cm$^3$ einer Aluminiumisoprenyllösung, die 0,5 mol Aluminiumisoprenyl/dm3 enthält, versetzt. Dadurch werden etwa 35 Gew.-% des vierwertigen Titans zu Titan(III) reduziert.

Diese Katalysatorkomponente wird in einem kontinuierlichen Zweistufenverfahren zur Polymerisation von Ethylen eingesetzt.

Typische Betriebsdaten sind (Tabelle 1):

|  | Reaktor 1 (120 dm$^3$) | Reaktor 2 (120 dm$^3$) |
|---|---|---|
| Temperatur | 83 °C | 83 °C |
| Katalysatorzufuhr | 2,5 mmol/h | 15 mmol/h |
| Dispergiermittel (Dieselöl) | 25 dm$^3$/h | 50 dm$^3$/h |
| Ethylen | 7 kg/h | 8 kg/h |
| Wasserstoff im Gasraum | 80 Vol-% | 6 Vol-% |
| Gesamtdruck | 10 bar | 2,5 bar |

Ein unter diesen Betriebsbedingungen mittels Triisobutylaluminium als Cokatalysator hergestelltes Polymerisat hatte folgende Produkteigenschaften:

| Pulver: | Viskositätszahl (ISO R 1191) | 300 | cm$^3$/g |
|---|---|---|---|
|  | MFI 190/5 | 0,65 | g/ 10 min |
|  | MFI 190/2,16 | 0,19 | g/10 min |
|  | Dichte (23 °C) | 0,944 | g/cm$^3$/g |
| Granulat: | MFI 190/5 | 0,45 | g/10 min |
|  | MFI 190/2,16 | 0,12 | g/10 min |

(fortgesetzt)

| | Dichte (23 °C) | 0,94 | g/cm$^3$/g |
|---|---|---|---|

Das lineare Polyethylen niedriger Dichte ( = PE-LLD) mit einer engen, unimodalen Molmassenverteilung besitzt eine Dichte (23 °C) von 0,910 bis 0,925, vorzugsweise 0,915 bis 0,925 g/cm$^3$ und einen MFI 190/2,16 von 0,5 bis 2,0 g/10 min. In die Polymerkette können geringe Mengen anderer Monomereinheiten, welche sich vom Propylen, 1-Buten, 1-Penten, 1-Hexen, 1-Hepten oder 1-Octen oder 4-Methylpenten-1 ableiten, eingebaut sein.

Geeignete lineare Polyethylene niedriger Dichte (PE-LLD) werden erhalten durch Polymerisation mittels Übergangsmetall-Katalysatoren. Sie sind im Handel erhältlich. Geeignete Produkte sind in Tabelle 2 aufgeführt:

| | Herstellungs-Verfahren | Dichte (23 °C) g/cm$^3$ | MFI 190/2,16 g/10 min |
|---|---|---|---|
| Produkt 1 | Niederdruck (PE-LLD) | 0,923 | 1,15 |
| Produkt 2 | " | 0,920 | 1,0 |
| Produkt 3 | " | 0,919 | 0,88 |
| Produkt 4 | " | 0,919 | 1,02 |
| Produkt 5 | " | 0,917 | 0,89 |

In der erfindungsgemäßen Formmasse ist das Verhältnis Polyethylen-HD zu Polyethylen-LLD 50:50 bis 80:20, vorzugsweise 60:40 bis 75:25.

Neben den Polyethylenen kann die erfindungsgemäße Formmasse noch die üblichen Zusatzstoffe enthalten, beispielsweise a) Wärmestabilisatoren, Antioxidantien, UV-Absorber, Lichtschutzmittel, Metalldesaktivatoren, Peroxidzerstörende Verbindungen, basische Costabilisatoren und b) Füllstoffe, Verstärkungsmittel, Weichmacher, Gleitmittel, Emulgatoren, Pigmente, optische Aufheller, Flammschutzmittel, Antistatika oder Treibmittel.

Die verschiedenen Additive der vorgenannten Gruppe a) werden der Formmasse in einer Menge von 0,01 bis 10, vorzugsweise 0,01 bis 5 Gew.-%, bezogen auf das Gesamtgewicht der Formmasse, zugesetzt. Der Mengenanteil der Additive der Gruppe b) beträgt 1 bis 80, vorzugsweise 10 bis 50 Gew.-%, bezogen auf die gesamte Formmasse.

Die Herstellung der erfindungsgemäßen Formmasse erfolgt nach den bei der Verarbeitung von Kunststoffen üblichen Methoden, beispielsweise durch Granulieren von Granulat/Granulat- oder Granulat/Pulver-Gemischen unter Zusatz eventueller Additive.

Die Formmasse besitzt eine Dichte (23 °C) von 0,930 bis 0,940 g/cm$^3$ und einen MFI 190/2,16 von 0,05 bis 1,0, vorzugsweise 0,1 bis 1,0 g/10 min und erfüllt die Anforderungen für ein P23 klassifiziertes thermoplastisches Material nach ASTM D 1248 mit einer Streckspannung > 18 MPa (> 12 MPa nach ASTM D 1248 und gemessen nach DIN 53455) und einer Reißdehnung von > 700 % (> 400 % nach ASTM D 1248 und gemessen nach DIN 53455) und einer Versprödungstemperatur ("brittleness temperature") <-60 °C (nach ASTM D 746 gemessen). Das Material zeigt außerdem einen außerordentlichen Widerstand gegenüber langsamem Rißwachstum (ESCR).

Die aus der Formmasse nach üblichem Verfahren hergestellten Rohre haben ausgezeichnete Eigenschaften:

Verarbeitung sehr gut
Rohroberfläche sehr gut
Mechanische Eigenschaften:

Zug E-Modul (DIN 53475) ≈ 620 MPa
Kerbschlagzähigkeit $a_K$ ≈ 15-35 mJ/mm$^2$ bei 0 °C (DIN 53453 U-Kerbe)

Langzeiteigenschaft (Zeitstand PN10 32/3 mm Rohr)

nach DIN 8075
Standzeit ($\sigma$ = 4 MPa, 80 °C) > 5000 h

Die Erfindung wird durch die nachstehenden Beispiele näher erläutert.

Beispiel 1

67 Gewichtsteile Pulver eines Polyethylen-HD mit einer bimodalen Molmassenverteilung, 33 Gewichtsteile Granulat eines 1-Buten-4-Methylpenten-1-Ethylen-Terpolymers (Produkt 1) mit einer unimodalen Molmassenverteilung, 0,05 Gewichtsteile Pentaerythrit-tetrakis[3-(3,5-di-t-butyl-4-hydroxyphenyl)-propionat], 0,1 Gewichtsteile Tris(2,4-di-t-butylphenyl)phosphit und 0,2 Gewichtsteile Ca-Stearat wurden gemischt und mittels eines Doppelschneckenextruders (D = 53 mm, L = 10 D; T = 210-240 °C) unter Inertgasüberlagerung granuliert.
Die Daten der Polymeren waren:

PE-HD:    Dichte = 0,944 g/cm$^3$
          MFI 190/2,16 = 0,23 g/10 min
          MFI 190/5 = 0,70 g/10 min
PE-LLD:   Dichte = 0,923 g/cm$^3$
          MFI 190/2,16 = 1,15 g/10 min
          MFI 19015 = 3,18 g/10 min

Aus dem Granulat wurden Prüfkörper hergestellt und die in Tabelle 3 genannten Prüfungen durchgeführt. Die Ergebnisse sind ebenfalls in Tabelle 3 zusammengestellt.

Beispiel 2

65 Gewichtsteile Granulat eines Polyethylen-HD mit einer bimodalen Molmassenverteilung, 35 Gewichtsteile Granulat eines 1-Octen-Ethylen-Copolymers (Produkt 2) mit unimodaler Molmassenverteilung und die Stabilisatoren gemäß Beispiel 1 wurden gemischt und analog Beispiel 1 zu einem Granulat verarbeitet.

PE-HD:    Dichte = 0,944 g/cm$^3$
          MFI 190/2,16 = 0,16 g/10 min
          MFI 190/5 = 0,62 g/10 min
PE-LLD:   Dichte = 0,920 g/cm$^3$
          MFI 190/2,16 = 1,0 g/10 min
          MFI 190/5 = 3,15 g/10 min

Die Prüfergebnisse sind in Tabelle 3 zusammengestellt.

Beispiel 3

65 Gewichtsteile Pulver eines Polyethylen-HD mit einer bimodalen Molmassenverteilung, 35 Gewichtsteile Granulat eines 1-Octen-Ethylen-Copolymers
(Produkt 2) mit einer unimodalen Molmassenverteilung und die Stabilisatoren gemäß Beispiel 1 wurden gemischt und analog Beispiel 1 zu einem Granulat verarbeitet.

PE-HD:    Dichte = 0,944 g/cm$^3$
MFI 190/2,16 = 0,2 g/10 min
MFI 190/5 = 0,80 g/10 min

PE-LLD:    Dichte = 0,920 g/cm$^3$
MFI 190/2,16 = 1,0 g/10 min
MFI 190/5 = 3,15 g/10 min

Die Prüfergebnisse sind in Tabelle 3 zusammengestellt.

Beispiel 4

Aus den Formmassen gemäß der Beispiele 1 bis 3 wurden auf einer Rohranlage PN10-Rohre hergestellt. Die Maschinendaten waren:

Extruder D = 48 mm, L = 24,4 D
Werkzeug Dorn-∅ 26,5 mm, Mundstück ∅ 32,1 mm
Vakuumkalibrierung
Kühlbad Länge 3 m, Temperatur etwa 15 °C

Die Solltemperatur im Extruder betrug 200 °C. Der Extruder wurde bei verschiedenen Drehzahlen betrieben und der Durchsatz, der Massedruck und die Massetemperatur gemessen. Die Werte sind in Tabelle 4 zusammengefaßt.

Beispiel 5

Die nach Beispiel 4 gefertigten Rohre wurden einem Zeitstandversuch nach DIN 8075 unterworfen. Die Standzeiten betrugen für die Rohre aus der Formmasse

nach Beispiel 1 > 4800 h,
nach Beispiel 2 > 5000 h und
nach Beispiel 3 > 4000 h.

EP 0 517 222 B1

Tabelle 3

| Eigenschaft | | Prüfmethode | | Beispiel 1 | Beispiel 2 | Beispiel 3 |
|---|---|---|---|---|---|---|
| Dichte | | DIN 53479 | g/cm³ | 0,938 | 0,935 | 0,935 |
| VZ | | ISO / R 1191 | cm³/g | 290 | 270 | 260 |
| MFI 190/2,16 | | DIN 53735 | g/10 min | 0,23 | 0,30 | 0,31 |
| MFI 190/5 | | | | 0,93 | 1,13 | 1,15 |
| MFI 190/21,6 | | | | 18,2 | 19,0 | 18,6 |
| MFR 21,6/5 | | | | 19,6 | 16,8 | 16,2 |
| Zug-E-Modul | | DIN 53457-t | MPa | 643 | 636,4 | 618,4 |
| B-K Modul | | DIN 54852 (1 min) | MPa | 804 | 766 | 751 |
| Streckspannung | | DIN 53455 ISO / R 527 | MPa | 19,9 | 18,7 | 18,6 |
| Dehnung bei SS | | 125 mm/min | % | 9,1 | 11,6 | 10,3 |
| Reißfestigkeit | | Probekörper 3 | MPa | 38,6 | 34,7 | 37,5 |
| Reißdehnung | | | % | 793,7 | 740,0 | 749,7 |
| $a_K$ | 23 °C | Kerbschlagzähigkeit | mJ/mm² | 18,8 | o.B.** | o.B.** |
| | 0 °C | U-Kerbe   DIN 53453 | | 16,1 | 28,6 | 36,6 |
| | -20 °C | (gepreßter Normkleinstab) | | 10,4 | 13,2 | 13,5 |
| Belltest 100 °C | | ASTM D 1693 C | h | > 1000 | > 1000 | > 1000 |
| Rißtest 80 °C * | | 5 MPa, Glykol | h | 379 ± 128 | > 2000 | > 2000 |
| OIT 200 °C | | ISO / IC 138 | min | 48 | 28,5 | 23,6 |

* Spannungsrißfestigkeit: Standzeit von rundum gekerbten Proben mit quadratischem Querschnitt

** ohne Bruch

Tabelle 4

|  |  |  | Beispiel 1 | Beispiel 2 | Beispiel 3 |
|---|---|---|---|---|---|
| n = 50 min$^{-1}$ | $T_m$ | °C | 221 | 223 | 223 |
|  | P | bar | 115 | 110 | 110 |
|  | Q | kg/h | 21,7 | 22,1 | 21,9 |
|  | N/Q | kWh/kg | 0,203 | 0,214 | 0,216 |
| n = 80 min$^{-1}$ | $T_m$ | °C | 227 | 228 | 229 |
|  | P | bar | 135 | 135 | 135 |
|  | Q | kg/h | 34,5 | 35,2 | 34,6 |
|  | N/Q | kWh/kg | 0,209 | 0,207 | 0,214 |
| n = 110 min$^{-1}$ | $T_m$ | °C | 231 | 233 | 233 |
|  | P | bar | 155 | 155 | 158 |
|  | Q | kg/h | 47,4 | 47,1 | 47,9 |
|  | N/Q | kWh/kg | 0,219 | 0,22 | 0,216 |

n   Drehzahl

Q   Durchsatz

P   Massedruck

$T_m$   Massetemperatur

N   Leistungsaufnahme

**Patentansprüche**

1. Polyethylen-Formmasse mit einer Dichte (23 °C) von 0,930 bis 0,940 g/cm$^3$ und einem MFI 190/2,16 von 0,05 bis 1,0 g/10 min, bestehend aus 50 bis 80 Gew.-% eines Polyethylen-HD mit einer Dichte (23 °C) von 0,940 bis 0,960 g/cm$^3$, einem MFI 190/2,16 von 0,01 bis 0,5 g/10 min und einer breiten bimodalen Molmassenverteilung, und 20 bis 50 Gew.-% eines Polyethylens-LLD mit einer niedrigen Dichte (23 °C) von 0,910 bis 0,925 g/cm$^3$ und einem MFI 190/2,16 von 0,5 bis 2,0 g/10 min und einer engen unimodalen Molmassenverteilung.

2. Polyethylen-Formmasse nach Anspruch 1, dadurch gekennzeichnet, daß sie durch Mischen und Granulieren der Bestandteile hergestellt wurde.

**Claims**

1. A polyethylene molding composition having a density (23°C) of 0.930 to 0.940 g/cm$^3$ and a MFI 190/2.16 of 0.05 to 1.0 g/10 min, consisting of 50 to 80 % by weight of a HD polyethylene having a density (23°C) of 0.940 to 0.960 g/cm$^3$, a MFI 190/2.16 of 0.01 to 0.5 g/10 min and a broad bimodal molecular mass distribution, and 20 to 50 % by weight of an LLD polyethylene having a low density (23°C) of 0.910 to 0.925 g/cm$^3$ and a MFI 190/2.16 of 0.5 to 2.0 g/10 min and a narrow unimodal molecular mass distribution.

2. The polyethylene molding composition as claimed in claim 1, which has been prepared by mixing and granulating the constituents.

**Revendications**

1. Composition moulable à base de polyéthylènes, ayant une densité (à 23°C) de 0,930 à 0,940 g/cm$^3$ et un indice de fluidité à l'état fondu MFI 190/2,16 de 0,05 à 1,0 g/10 min, constituée de 50 à 80 % en masse d'un polyéthylène HD ayant une densité (à 23°C) de 0,940 à 0,960 g/cm$^3$, un MFI 190/2,16 de 0,01 à 0,5 g/10 min et une distribution bimodale large des masses moléculaires, et de 20 à 50 % en masse d'un polyéthylène LLD ayant une densité faible (à 23°C) de 0,910 à 0,925 g/cm$^3$, un MFI 190/2,16 de 0,5 à 2,0 g/10 min et une distribution étroite unimodale des masses moléculaires.

2. Composition moulable à base de polyéthylènes selon la revendication 1, caractérisée en ce qu'elle a été obtenue par mélange et granulation des constituants.